## Europäisches Patentamt
## European Patent Office
## Office européen des brevets

(11) Veröffentlichungsnummer: **0 010 167 B1**

# EUROPÄISCHE PATENTSCHRIFT

(45) Veröffentlichungstag der Patentschrift:
28.10.81

(51) Int. Cl.³: **B 27 C 9/04, F 16 H 11/08**

(21) Anmeldenummer: 79103496.0

(22) Anmeldetag: 18.09.79

(54) Kombinierte Heimwerkermaschine.

(30) Priorität: 20.09.78 DE 2840798

(43) Veröffentlichungstag der Anmeldung:
30.04.80 Patentblatt 80/9

(45) Bekanntmachung des Hinweises auf die Patenterteilung:
28.10.81 Patentblatt 81/43

(84) Benannte Vertragsstaaten:
BE CH DE FR GB IT SE

(56) Entgegenhaltungen:
CH-A-260 370
FR-A-686 991

(73) Patentinhaber: Josef Scheppach Maschinenfabrik GmbH
& Co., Günzburger Strasse 69, D-8873 Ichenhausen (DE)

(72) Erfinder: Kühl, Hans, Dipl.-Ing., Kornbergweg 12,
D-7310 Plochingen (DE)
Erfinder: Müller, Heinz, Ing. grad., Eifelweg 5,
D-7321 Sparwiesen (DE)

(74) Vertreter: Munk, Ludwig, Dipl.-Ing., Maximilianstrasse 71,
D-8900 Augsburg (DE)

## Kombinierte Heimwerkermaschine

Die Erfindung betrifft eine kombinierte Heimwerkermaschine mit zwei nebeneinander angeordneten, unabhängig voneinander gelagerten Arbeitswellen, insbesondere einer Hobelwelle und einer Zusatzwelle zur Aufnahme auswechselbarer Werkzeuge bzw. Werkzeugträger, die im Bereich der einander zugewandten Enden mit jeweils einer zugeordneten Antriebsriemenscheibe versehen und mittels eines gemeinsamen, höhenverstellbar gelagerten Motors, der mit einer Antriebsriemenscheibe versehen ist, die über einen Treibriemen mit jeweils einer Antriebsriemenscheibe verbindbar ist, alternativ antreibbar sind.

Aus der CH-A-PS 260 370 ist eine kombinierte Holzbearbeitungsmaschine mit den gattungsgemässen Merkmalen bekannt. Zur drehschlüssigen Verbindung der Motor-Riemenscheibe mit jeweils einer der nebeneinander angeordneten Riemenscheiben ist ein gemeinsamer Antriebsriemen vorgesehen. Durch Umlegen dieses Antriebsriemens kann entweder die Hobelwelle oder die Zusatzwelle angetrieben werden, wobei die jeweils andere Einheit stillgesetzt sein soll. Die beiden Riemenscheiben liegen bei der bekannten Anordnung dicht unterhalb des Arbeitstisches, was eine Zugänglichkeit ausserordentlich erschwert. Der Riemenwechsel erweist sich daher als sehr zeitraubend und umständlich. Andererseits ergebe eine Anordnung mit guter Zugänglichkeit einen sehr hohen Platzbedarf. Ausserdem ergibt sich jedoch bei der aus der CH-A-260 370 entnehmbaren Anordnung nicht in jedem Fall eine Zwangsabschaltung der jeweils nicht benötigten Welle. Die hier zur Aufnahme eines Sägenblatts vorgesehene Zusatzwelle ist nämlich bei der bekannten Anordnung nicht stationär angeordnet, sondern höhenverstellbar gelagert. Dies ergibt zwar keine bessere Zugänglichkeit zu den Antriebsriemenscheiben, ermöglicht jedoch eine Einstellung, bei welcher der gemeinsame Treibriemen mit beiden Antriebsriemenscheiben im Eingriff steht. Bei der bekannten Anordnung weisen die genannten Antriebsriemenscheiben von Hobelwelle und hier als Kreissägenwelle ausgebildeter Nebenwelle zwar unterschiedlichen Durchmesser auf, so dass bei der genannten Einstellung die kleinere Riemenscheibe nicht voll angetrieben wird. Es kann jedoch jedenfalls eine so weitgehende Mitnahme erfolgen, dass Verletzungen möglich sind. Ausserdem ist nicht zu übersehen, dass unterschiedliche Durchmesser im Bereich der Antriebsriemenscheiben bei gleichzeitiger Höhenverstellbarkeit einer Riemenscheibe eine saubere Riemenabdeckung erschweren. Die Höhenverstellbarkeit der einen Arbeitswelle und damit auch der zugehörigen Riemenscheibe ermöglicht jedoch nicht nur eine Einstellung, bei welcher beide Riemenscheiben mit dem Treibriemen in Eingriff sind, sondern gibt dem Betreiber einer derartigen Anordnung auch die Möglichkeit an die Hand, einen entsprechend breiten Riemen oder überhaupt einen zweiten Riemen einzufügen und gleichzeitig noch eine solche Einstellung vorzunehmen, dass beide Riemen mit der jeweils zugeordneten Riemenscheibe voll im Eingriff sind. Die bekannte Anordnung bietet demnach ersichtlich eine einfache Möglichkeit, die an sich beabsichtigte Sicherheitsmassnahme zu umgehen und erweist sich demnach als nicht sicher genug. In diesem Zusammenhang ist auch zu berücksichtigen, dass bei der bekannten Anordnung die Abschaltung der Hobelwelle beim Arbeiten mit einem anderen Werkzeug nicht konsequent durchgeführt ist. Einerseits sind zwar die Hobelwelle und die Zusatzwelle zur Aufnahme eines Kreissägenblatts getrennt. Andererseits ist jedoch die Hobelwelle mit einem Spannfutter zur Aufnahme eines Bohrers versehen. Der Antrieb dieses Spannfutters ist ausschliesslich über die Hobelwelle möglich, d.h. wenn gebohrt wird, muss auch die Hobelwelle laufen. Hierbei wird demnach eine gewisse Unfallgefahr und Lärmbelästigung in Kauf genommen. Es ist daher aber für den Betreiber einer derartigen Anordnung gar nicht einzusehen, warum es dann hinsichtlich der Kreissägenwelle nicht ebenso sein soll.

Die DE-U- 1 876 244 zeigt eine Holzbearbeitungsmaschine mit zwei parallel und axial gegeneinander versetzten Arbeitswellen, hier einer Sägenwelle und einer Schleifwelle. Die Sägewelle ist bei dieser bekannten Anordnung mittels einer Wippe schwenkbar aufgehängt und im Bereich ihres dem Sägenblatt gegenüberliegenden Endes mit zwei Riemenscheiben versehen, auf denen jeweils ein zugeordneter Treibriemen läuft, von denen der eine zur Abtriebsriemenscheibe eines Antriebsmotors und der andere zu einer auf der parallel und axial versetzten Schleifwelle angeordneten Antriebsriemenscheibe führt. Die Riemenlänge des letztgenannten, zur Antriebsriemenscheibe der Schleifwelle führenden Treibriemens ist dabei offenbar so gewählt, dass dieser Riemen nur schlaff auf den zugeordneten Riemenscheiben aufliegt, wenn die Sägenwelle in ihrer hochgeschwenkten Stellung sich befindet, welche der Arbeitsstellung des Kreissägenblatts entspricht, und dass der genannte Riemen nur dann gespannt ist, wenn die Sägenwelle abgeschwenkt ist und damit das Sägenblatt aus dem Gefahrenbereich herausgenommen ist. Dem liegt zwar ebenfalls der Gedanke zugrunde, beim Arbeiten mit der Schleifwelle eine durch das laufende Sägenblatt sich ergebende Unfallgefahr zu vermeiden und umgekehrt. Dies ist jedoch auch hier nur bedingt der Fall. Es ist nämlich davon auszugehen, dass auch der schlaff auf der Riemenscheibe aufliegende Treibriemen der Schleifwelle durch Reibung leicht mitgenommen werden kann, was dazu führt, dass die Schleifwelle insbesondere bei längeren Sägearbeiten auf Touren kommt. Nachteilig dabei ist, dass Zwischenstellungen des Sägeblatts hier nicht zulässig sind. Ganz abgesehen davon läuft bei der bekannten Anordnung die Sägenwelle und damit das Sägenblatt sowohl bei Sägearbeiten als auch bei Schleifarbeiten, da die Schleifwelle nicht direkt vom Motor, sondern von der Sägenwelle angetrieben wird. Hierdurch ergibt sich eine ganz beträchtliche Lärmbelästigung. Ausserdem ermöglicht die bekannte Anordnung jeweils lediglich eine Arbeitsgeschwindigkeit im Bereich beider Sägenwellen. Auch diese bekannte Anordnung erweist sich demnach als nicht arbeitssicher und bedienungsfreundlich genug.

Hiervon ausgehend ist es daher die Aufgabe der vorliegenden Erfindung eine Heimwerkermaschine gattungsgemässer Art mit einfachen und daher kostengünstigen Mitteln so zu verbessern, dass die Arbeits- und Bedienungssicherheit gegenüber dem Stand der Technik noch erhöht wird und dennoch eine vergleichsweise einfache und bequeme Bedienbarkeit sichergestellt und eine platzsparende Ausführung möglich ist.

Diese Aufgabe wird erfindungsgemäss dadurch gelöst, dass beide Arbeitswellen unverrückbar angeordnet und mit abgedeckten Antriebsriemenscheiben gleichen Durchmessers versehen sind, denen jeweils ein eigener, nur von der Motor-Antriebsriemenscheibe, die als Stufenscheibe mit dem axialen Abstand der Antriebsriemenscheiben entsprechenden Stufenabstand ausgebildet ist, abnehmbarer Treibriemen zugeordnet ist, der in von der Motor-Abtriebsriemenscheibe abgenommenem Zustand in jeweils einem zugeordneten, neben der Motor-Abtriebsriemenscheibe angeordneten, gehäusefesten Halter einlegbar ist und dass beide Treibriemen unterschiedliche Achsabstände zwischen der jeweils zugehörigen Antriebsriemenscheibe und der hierauf jeweils ausrichtbaren Stufe der Abtriebsriemenscheibe des Motors, der in axialer Richtung zumindest um das Mass des Abstands der Antriebsriemenscheiben verstellbar gelagert ist, erfordern.

Durch diese Massnahmen ist sichergestellt, dass die beiden Treibriemen im Bereich der den Arbeitswellen zugeordneten Antriebsriemenscheiben, die aus Sicherheitsgründen abgedeckt sind, stets in Stellung bleiben können. Die In- bzw. Ausserbetriebnahme des jeweils gewünschten bzw. nicht gewünschten Triebriemens erfolgt hierbei in vorteilhafter Weise im Bereich der Motor-Abtriebsriemenscheibe, die leicht zugänglich ist, da der Antriebsmotor zur Bewerkstelligung einer ausreichenden Riemenspannung höhenmässig und zur Bewerkstelligung unterschiedlicher Drehzahlen in axialer Richtung ohnehin verstellbar sein muss, wobei gleichzeitig ein Riemenwechsel stattzufinden hat, erfordert demnach die mit den erfindungsgemässen Massnahmen bewerkstelligte Zwangsabschaltung der jeweils nicht benötigten Arbeitswelle praktisch keinen Mehraufwand. Die erfindungsgemässe Anordnung erweist sich demnach als höchst bedienungsfreundlich und arbeitssicher. Die Zugänglichkeit im Bereich der den Arbeitswellen zugeordneten Antriebsriemenscheiben spielt hierbei in vorteilhafter Weise keine Rolle. Es ist daher in vorteilhafter Weise möglich, geeignete Schutzbleche bzw. Riemenführungen und dergleichen vorzusehen, was die Arbeitssicherheit noch erhöht und gleichzeitig einen sauberen Riemenlauf gewährleistet. Gleichzeitig ergibt sich infolge gleicher Durchmesser im Bereich der Antriebsriemenscheiben eine höchst gedrängte Bauweise und eine verhältnismässig einfache Ausführung der genannten Schutzbleche und dergleichen. Mit Hilfe der im Bereich des Motors ohne jede Störwirkung vorsehbaren Stufenscheibe sind in vorteilhafter Weise unterschiedliche Arbeitsgeschwindigkeiten ohne weiteres zu bewerkstelligen.

Ein weiterer Vorteil der erfindungsgemässen Massnahmen ist darin zu sehen, dass infolge der praktisch stationären Anordnung der beiden Arbeitswellen und damit auch der zugeordneten Riemenscheiben ein Riementausch nicht ohne weiteres möglich ist. Die erfindungsgemässen Massnahmen stellen daher gleichzeitig sicher, dass die vom Hersteller eingebauten Riemen vorgegebener Länge nicht einfach entfernt und durch neue Riemen anderer Länge ersetzt werden können. Da die beiden Treibriemen jeweils unterschiedlichen Achsabstand zum Motor-Abtriebselement erfordern sollen, ist aber sichergestellt, dass nie beide Antriebsscheiben und damit beide Arbeitswellen gleichzeitig in Betrieb genommen werden können. Die erfindungsgemässen Massnahmen gewährleisten demnach eine Zwangsabschaltung der jeweils nicht benötigten Arbeitswelle. Da jedem Riemen gleichzeitig ein gehäusefester Halter zugeordnet ist, ist gewährleistet, dass der jeweils nicht benötigte Riemen völlig aus dem Aktionsbereich der Abtriebsriemenscheibe des Motors gelangt und damit auch nicht durch leichte Reibung langsam mitgenommen werden kann. Die mit der Erfindung erzielbaren Vorteile sind demnach insbesondere in erhöhter Arbeitssicherheit bei gleichzeitig gewährleisteter hoher Bedienungsfreundlichkeit zu sehen.

Vorteilhafte Weiterbildungen und zweckmässige Ausgestaltungen der übergeordneten Massnahmen sind in den Ansprüchen 2 bis 7 gekennzeichnet.

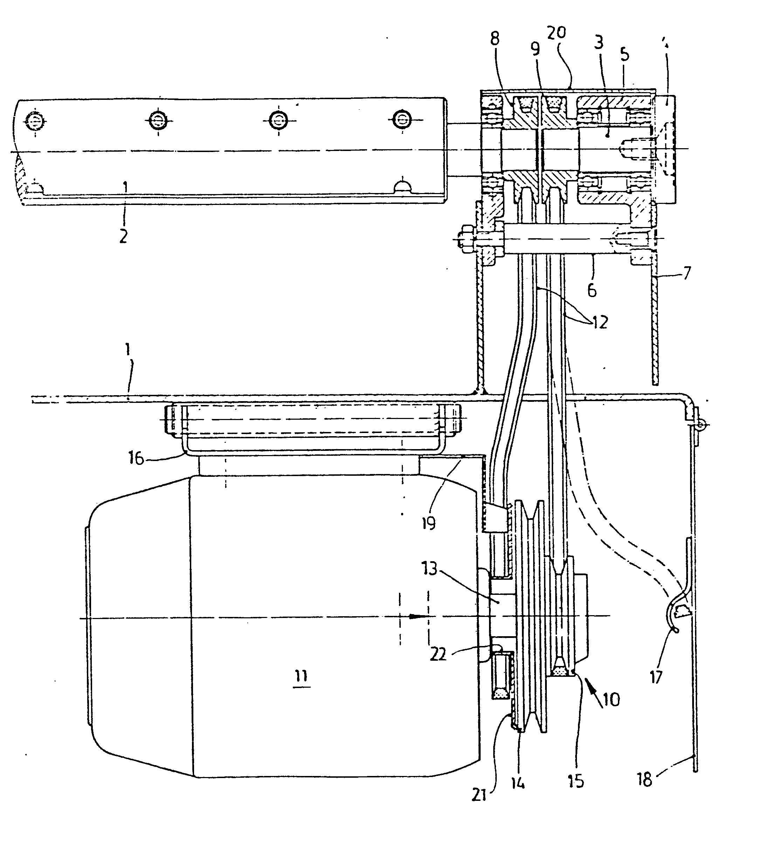

Nachstehend ist ein Ausführungsbeispiel der Erfindung anhand der Zeichnung näher erläutert. Diese zeigt eine Ansicht einer schematisch dargestellten Heimwerkermaschine teilweise im Schnitt.

In der Zeichnung ist mit 1 das Maschinengestell einer Heimwerker-Hobelmaschine bezeichnet, deren Hobelwelle 2 beidseitig im Maschinengestell gelagert ist. Die dargestellte Hobelmaschine soll mit wechselweise anbaubaren Drechseleinrichtungen etc. kombinierbar sein. Der grundsätzliche Aufbau der hierfür erforderlichen Anbauvorrichtung ist an sich bekannt, so dass eine umfassende Erläuterung entfallen kann. Den an das Maschinengestell 1 der Hobelwelle anbaubaren, hier nicht näher dargestellten Zusatzgeräten ist eine koaxial zu der eine erste Arbeitswelle bildenden Hobelwelle 2 angeordnete Zusatzwelle 3 zugeordnet, die mit einem Aufnahmekopf 4 zur Halterung der den Zusatzgeräten zugeordneten Werkzeuge bzw. deren Werkzeugträger versehen ist. Die als von der Hobelwelle 2 völlig unabhängiges Bauteil ausgeführte Zusatzwelle 3 ist ausserhalb der Hobelwelle 2 gelagert. Hierzu ist im dargestellten Ausführungsbeispiel eine Lagerbüchse 5 vorgesehen, die an einem mit Abstandsbolzen 6 am Maschinengestell 1 festgelegten Deckblech 7 befestigt ist. Die Hobelwelle 2 und die den Zusatzgeräten zugeordnete Zusatzwelle 3 sind mit jeweils einer eigenen Antriebsriemenscheibe 8 bzw. 9 versehen, welche im dargestellten Ausführungsbeispiel als Keilriemenscheiben ausgebildet sind. Die Antriebsriemenscheiben 8 bzw. 9 sind auf benachbarten, über die jeweilige Wellenlagerung auskragenden Wellenstummeln angeordnet, was eine Konstruktion mit einem relativ geringen Abstand zwischen den einander benachbarten Antriebsriemenscheiben ermöglicht. Es wäre aber auch ohne weiteres denkbar, insbesondere die der Zusatzwelle 3 zugeordnete Antriebsriemenscheibe 9 im Bereich zwischen den beiden Lagern der Zusatzwelle 3 anzuordnen, was sich besonders günstig auf die zu erwartende Biegebelastung dieser Welle auswirken kann. In diesem Fall wäre die Lagerbüchse 5 einfach mit einer über einen bestimmten Umfangswinkel sich erstreckenden Ausnehmung für den der Zusatzwellen-Antriebsriemenscheibe zugeordneten Treibriemen zu versehen. Das auf die Antriebsriemenscheiben 8 bzw. 9 zu übertragende Drehmoment wird von einem mit einer als Ganzes mit 10 bezeichneten Abtriebsriemenscheibe versehenen Elektromotor 11 abgenommen, der so im unteren Bereich des Maschinengestells 1 aufgehängt ist, dass die Motor-Abtriebsriemenscheibe 10 auf die Antriebsriemenscheiben 8 bzw. 9 ausgerichtet ist. Zweckmässig ist der Elektromotor 11 dabei mit aussenliegender Abtriebsriemenscheibe 10 etwa unterhalb der Hobelwelle 2 angeordnet.

Zur Verbindung der Motor-Abtriebsriemenscheibe 10 mit den Antriebsriemenscheiben 8 bzw. 9 sind diesen zugeordnete Treibriemen 12, hier in Form jeweils eines Keilriemens, vorgesehen. Die Motor-Abtriebsriemenscheibe 10 ist als Stufenscheibe ausgebildet, deren Stufen 14 bzw. 15 im selben Abstand wie die Antriebsriemenscheiben 8 bzw. 9 angeordnet sind. Hierdurch ist es in vorteilhafter Weise möglich, die Hobelwelle 2 bzw. die Zusatzwelle 3 mit einer höheren und einer niederen Geschwindigkeit anzutreiben. Die Hobelwelle 2 benötigt in der Regel lediglich die höhere Drehzahl. Zum Antrieb der Zusatzwelle 3 mit unterschiedlichen Drehzahlen ist der Motor 11 seitlich, d.h. in axialer Richtung verschiebbar gelagert. Im dargestellten Ausführungsbeispiel genügt dabei eine solche Verschiebbarkeit, dass der der Hobelwelle 2 zugeordnete Treibriemen nur mit der Stufe 14 grösseren Durchmessers der Motor-Abtriebsriemenscheibe 10 und der der Zusatzwelle 3 zugeordnete Treibriemen 12 wahlweise mit beiden Stufen 14 bzw. 15 der Motor-Abtriebsriemenscheibe 10 in Eingriff bringbar ist, d.h. die jeweilige Stufe in axialer Richtung genau auf die betreffende Antriebsriemenscheibe 8 bzw. 9 ausgerichtet ist. Um die hier als Keilriemen ausgebildeten Treibriemen 12 leicht und einfach in und ausser Eingriff mit der Motor-Abtriebsriemenscheibe 10 bringen zu können und um in jeder Arbeitsstellung die erforderliche Riemenspannung zu gewährleisten, ist der Motor 11 höhenverstellbar, vorzugsweise kippbar am Maschinengestell 1 aufgehängt. Im dargestellten Ausführungsbeispiel soll der Motor 11 hierzu einfach auf einer scharnierartigen Wippe 16 befestigt sein, die ihrerseits zur Bewerkstelligung einer seitlichen Verstellbarkeit mittels einer hier nicht näher ausgeführten Stift-Schlitzverbindung am Maschinengestell 1 festgelegt ist. Da die Treibriemen 12 stets im Eingriff mit der jeweils zugeordneten Antriebsriemenscheibe 8 bzw. 9 bleiben, kommt es hier in vorteilhafter Weise nicht auf eine Zugänglichkeit der Antriebsriemenscheiben 8 bzw. 9 an, so dass grosse Freizügigkeit hinsichtlich der Konstruktion und Ausbildung des Maschinengestells 1 sowie der hieran jeweils anbaubaren Zusatzgeräte gegeben ist und gleichzeitig eine aus Sicherheitsgründen saubere Abdeckung der Antriebsriemenscheiben 8 bzw. 9 möglich ist. Im dargestellten Ausführungsbeispiel ist dies durch ein bei 20 angedeutetes, die Antriebsriemenscheiben 8 bzw. 9 beider Arbeitswellen überbrückendes Deckblech verdeutlicht.

Der der jeweils anzutreibenden Arbeitswelle zugeordnete Treibriemen 12 wird einfach auf die gewünschte Stufe 14 bzw. 15 der leicht zugänglichen Motor-Abtriebsriemenscheibe 10 aufgelegt. Der jeweils andere Treibriemen 12 ist dabei zwangsweise von der Motor-Abtriebsriemenscheibe 10 abzunehmen, wie weiter unten noch näher ausgeführt wird. Im dargestellten Betriebszustand ist der der Antriebsriemenscheibe 9 der Zusatzwelle 3 zugeordnete Treibriemen 12 auf die Langsamlauf-Stufe 15 der Motor-Abtriebsriemenscheibe 10 aufgelegt, was beispielsweise dann vorkommt, wenn ein Langloch-Bohrgerät angebaut ist.

Der der Antriebsriemenscheibe 8 der Hobelwelle 2 zugeordnete Treibriemen 12 befindet sich ausser Eingriff mit der Motor-Abtriebsriemenscheibe 10. Zur Sicherung der Treibriemen 12 in einer derartigen Stillstandstellung sind diesen jeweils zugeordnete Halter vorgesehen, wie bei 17 für den der Antriebsriemenscheibe 9 zugeordneten Treibriemen 12 angedeutet ist. Der Halter 17 ist hier einfach als abgekröpfte Federlasche ausgebildet, in deren Abkröpfung der jeweils zugeordnete Treibriemen mit seinem der jeweiligen Antriebsriemenscheibe 8 bzw. 9 gegenüberliegenden Bereich einrastbar ist. Der die Motor-Abtriebsriemenscheibe 10 aufnehmende Raum ist von aussen über einen Schwenkdeckel 18 gut zugänglich, an welchem im dargestellten Ausführungsbeispiel der Halter 17 zur Aufnahme des der Antriebsriemenscheibe 9 zugeordneten Treibriemens 12 befestigt sein soll. Zur Stillstandhalterung des hobelwellenseitigen Treibriemens 12 können an einer gestellseitig festgelegten Blende 19 befestigte, hier nicht näher dargestellte Halter der bei 17 angedeuteten Art vorgesehen sein. Im dargestellten Ausführungsbeispiel ist zwischen der Motor-Abtriebsriemenscheibe 10 und dem Elektromotor 11 ein Schutzteller 21 vorgesehen, dessen Durchmesser etwa dem Durchmesser der benachbarten Stufe 14 entspricht und das mit einer die Motorwelle 13 umgreifenden Schutzbüchse 22 versehen ist. Der Schutzteller 21 ist durch nicht näher bezeichnete Laschen an einer gestellseitig festgelegten Blende 19 befestigt, so dass sich auf diese Weise ein Halter zum Einlegen des zugeordneten Treibriemens 12 ergibt. Der Abstand zwischen Schutzteller 21 und den benachbarten Rahmenteilen, hier der benachbarten Blende, entspricht daher zweckmässig zumindest der Riemenbreite.

Die Umfangslänge der Treibriemen 12 ist zur Bewerkstelligung des gewünschten Einzeleingriffs und damit der gewünschten Zwangsabstellung der jweils nicht benötigten Arbeitswelle so bemessen, dass jeder der beiden Treibriemen 12 einen Achsabstand zwischen der zugehörigen Antriebsriemenscheibe 8 bzw. 9 und der hierauf jeweils ausgerichteten Stufe 14 bzw. 15 der Motor-Abtriebsriemenscheibe 10 erfordert, der merkbar grösser oder kleiner als der vom benachbarten Treibriemen geforderte Achsabstand zwischen der diesem zugeordneten Antriebsriemenscheibe und der hierauf jeweils ausgerichteten Stufe der Motor-Abtriebsriemenscheibe ist. Hierdurch ist sichergestellt, dass in der Arbeitsstellung des einen Treibriemens der jeweils andere Treibriemen entweder merkbar zu lang oder merkbar zu kurz ist, um mit der hierauf ausgerichteten Stufe der Motor-Abtriebsriemenscheibe in Eingriff gebracht werden zu können, was automatisch die gewünschte Zwangsabstellung ergibt. Bei Verwendung einer Stufenscheibe zur Bildung der Motor-Abtriebsriemenscheibe bei gleich grossen Antriebsriemenscheiben 8 bzw. 9 lässt sich dies vielfach bereits bei gleicher Umfangslänge der beiden Treibriemen 12 verwirklichen. Bei einer Heimwerkermaschine vorstehend geschilderter Art, bei welcher lediglich die Zusatzwelle 3 zwei Geschwindigkeiten benötigt und die Hobelwelle 2 lediglich mit der höheren Geschwindigkeit angetrieben wird, ist es besonders vorteilhaft, wenn der wahlweise mit beiden Stufen 14 bzw. 15 der am etwa unterhalb der Hobelwelle 2 angeordneten Motor 11 angebrachten Motor-Abtriebsriemenscheibe 10 in Eingriff bringbare Treibriemen 12 der Zusatzwelle 3 etwas länger ist als der lediglich mit der Stufe 14 grösseren Durchmessers der Motor-Abtriebsriemenscheibe 10 in Eingriff bringbare Treibriemen 12 der Hobelwelle 2. Hierdurch ist sichergestellt, dass einerseits der kürzere, der Hobelwelle 2 zugeordnete Treibriemen 12 unmöglich zum Eingriff mit der benachbarten Stufe 14 der Motor-Abtriebsriemenscheibe 10 kommen kann, gleichgültig, ob die in diesem Falle aktivierte Zusatzwelle 3 über die grössere Stufe 14 bzw. die kleinere Stufe 15 der Motor-Abtriebsscheibe 10 angetrieben wird, und dass andererseits, sofern die Hobelwelle 2 mittels der grösseren Stufe 14 angetrieben wird, der in diesem Falle auf die zugeordnete Antriebsriemenscheibe 10 ausgerichtete Stufe 15 kleineren Durchmessers der Abtriebsriemenscheibe 10 so weit überragt, dass eine Mitnahme auch dann ausgeschlossen ist, wenn einmal vergessen wird, diesen längeren Treibriemen 12 im passivierten Zustand in den zugeordneten Halter 17 einzulegen. Die Längen der beiden unterschiedlich langen Treibriemen sind dabei so aufeinander abgestimmt, dass der kürzere Treibriemen 12 jedenfalls noch nicht an der Motorwelle 13 bzw. der Schutzbüchse 22 streift, wenn der benachbarte längere Treibriemen 12 auf der Stufe 15 kleineren Durchmessers läuft. Durch Verwendung unterschiedlicher Riemenlängen lassen sich die bei der Einstellung des jeweils erforderlichen Achsabstands sich ergebenden Wege zur Erzielung erhöhter Übersichtlichkeit vergrössern, oder falls die Durchmesser-Unterschiede im Bereich der Stufen 14 bzw. 15 der Motor-Abtriebsriemenscheibe 10 gross genug sind, zur Vermeidung übersteigerter Verstellbewegungen des Motors 11 verkleinern.

Sofern mehr als zwei Geschwindigkeiten erforderlich sind, läst sich dies auf einfache Weise durch Verwendung einer mehrstufigen Abtriebs-Riemenscheibe 10 erreichen, deren Stufen jeweils denselben Abstand wie die Antriebsriemenscheiben 8 bzw. 9 aufweisen. In diesem Fall ist lediglich auch eine entsprechende Axialverstellbarkeit des Motors 11 zu gewährleisten.

**Patentansprüche**

1) Kombinierte Heimwerkermaschine mit zwei nebeneinander angeordneten, unabhängig voneinander gelagerten Arbeitswellen (2 bzw. 3), insbesondere einer Hobelwelle (2) und einer Zusatzwelle (3) zur Aufnahme auswechselbarer Werkzeuge bzw. Werkzeugträger, die im Bereich der einander zugewandten Enden mit jeweils einer zugeordneten Antriebsriemenscheibe (8 bzw. 9) versehen und mittels eines gemeinsamen, höhenverstellbar angeordneten Motors (11), der mit einer Abtriebsriemenscheibe (10) versehen ist, die über einen Treibriemen (12) mit jeweils einer Antriebsriemenscheibe (8 bzw. 9) verbindbar ist, alternativ antreibbar sind, dadurch gekennzeichnet, dass beide Arbeitswellen (2 bzw. 3) unverrückbar angeordnet und mit abgedeckten Antriebsriemenscheiben (8 bzw. 9) gleichen Durchmessers versehen sind, denen jeweils ein eigener, nur von der Motor-Abtriebsriemenscheibe (10), die als Stufenscheibe mit dem axialen Abstand der Antriebsriemenscheibe (8 bzw. 9) entsprechendem Stufenabstand ausgebildet ist, abnehmbarer Treibriemen (12) zugeordnet ist, der in von der Motor-Abtriebsriemenscheibe (10) abgenommenem Zustand in jeweils einem zugeordneten, neben der Motor-Abtriebsriemenscheibe (10) zugeordneten, gehäusefesten Halter (17 bzw. 19, 21) einlegbar ist und dass beide Treibriemen (12) unterschiedliche Achsabstände zwischen der jeweils zugehörigen Antriebsriemenscheibe (8 bzw. 9) und der hierauf jeweils ausrichtbaren Stufe (14 bzw. 15) der Abtriebsriemenscheibe (10) des Motors (11), der in axialer Richtung zumindest um das Mass des Abstands der Antriebsriemenscheiben (8 bzw. 9) verstellbar gelagert ist, erfordern.

2) Heimwerkermaschine nach Anspruch 1, bei der der Motor (11) mit aussenliegender Abtriebsriemenscheibe (10) unterhalb der Hobelwelle (2) angeordnet ist, dadurch gekennzeichnet, dass der Motorraum abtriebsriemenscheibenseitig durch eine bewegbare Klappe (18) abgedeckt ist.

3) Heimwerkermaschine nach wenigstens einem der vorhergehenden Ansprüche, dadurch gekennzeichnet, dass zumindest der dem motorfernen Treibriemen (12) zugeordnete Halter (17) als an der Klappe (18) befestigte Federlasche mit einer Abkröpfung ausgebildet ist, in welche der zugeordnete Treibriemen (12) in der Stillstand-Stellung einrastbar ist.

4) Heimwerkermaschine nach wenigstens einem der vorhergehenden Ansprüche, dadurch gekennzeichnet, dass zwischen dem Motor (11) und der Motor-Abtriebsriemenscheibe (10) eine parallel hierzu angeordnete, mit einer die Motorwelle (13) umgreifenden Schutzbüchse (22) versehenes Schutzteller (21) vorgesehen ist, welches zur Bildung eines Riemenhalters von benachbarten Rahmenteilen (19) mindestens einen der Riemenbreite entsprechenden Abstand aufweist.

5) Heimwerkermaschine nach wenigstens einem der vorhergehenden Ansprüche, bei welcher der Motor (11) in axialer Richtung so weit verstellbar ist, dass der der Hobelwelle (2) zugeordnete Treibriemen (12) nur mit der Stufe (14) grösseren Durchmessers der Antriebsriemenscheibe (10) und der der Zusatzwelle (3) zugeordnete Treibriemen (12) wahlweise mit beiden Stufen (14 bzw. 15) der Abtriebsriemenscheibe (10) antreibbar ist, dadurch gekennzeichnet, dass der wahlweise mit beiden Stufen (14 bzw. 15) antreibbare Treibriemen (12) länger als der nur mit der Stufe (14) grösseren Durchmessers antreibbare Treibriemen (12) ist.

6) Heimwerkermaschine nach wenigstens einem der vorhergehenden Ansprüche, dadurch gekennzeichnet, dass die der Zusatzwelle (3) zugeordnete Antriebsriemenscheibe (9) im Bereich zwischen den Zusatzwellen-Lagerstellen angeordnet ist.

7) Heimwerkermaschine nach wenigstens einem der vorhergehenden Ansprüche, dadurch gekennzeichnet, dass die Zusatzwelle (3) in einer Büchse (5) gelagert ist, die über Abstandsbolzen (6) mit dem Maschinengestell (1) verbunden ist.

**Claims**

1. A combined machine tool for hobby purposes with two separately bearinged working shafts (2 and 3) placed side by side, more specially a planing shaft (2) and a further shaft (3), for supporting different tools or tool supports, which at their two ends which are next to each other each have an input driving belt pulley (8 and 9) and of which one or the other as desired may be powered by way of a common motor (11), which may be adjusted in height, and which by way of a driving belt (12) may be joined up with one or the other of the input driving pulleys (8 and 9), characterized in that the two working shafts (2 and 3) are fixed in position and have convered input driving belt pulleys (8 and 9) of the same diameter, of which each has its own driving belt (12), which may be taken off only from the motor output belt pulley (10), which is stepped and has a step size equal to the axial spacing of the input driving belt pulleys (8 and 9), and the driving belt (12) after being taken off the motor output driving belt pulley (10) may be placed in a support (17 or 19, 20) fixed to the housing and placed next to the motor output driving belt pulley (10), and in that the two driving belts (12) make necessary different axial spacings between their input driving belt pulleys (8 and 9) and the step (14 or 15) which is in the place in question lined up therewith of the output driving belt pulley (10) of the motor (11), which may undergo axial adjustment at least by an amount equal to the spacing of the input driving belt pulleys (8 and 9).

2. A machine tool for hobby purposes as claimed in claim 1 in which the motor (11) is placed with an outside output driving belt pulley (10) under the planing shaft (2), characterized in that on the output driving belt pulley side the motor space is covered over by a door (18).

3. A machine tool for hobby purposes as claimed in claim 1 or claim 2, characterized in that at least the support (17) for the driving belt (12) furthest from the motor takes the form of a spring bolt, fixed to the door (18), with an angled part, into which the driving belt (12) in question may be locked when the system is not running.

4. A machine tool for hobby purposes as claimed in anyone of claims 1 to 3, characterized in that between the motor (11) and the motor output driving belt pulley (10) there is a guard plate (21), placed parallel thereto and having a guard sleeve (22) placed round the motor shaft (13), the guard plate (21) being spaced by a distance at least equal to the breadth of the belt, from the next frame parts (19) for forming a belt support.

5. A machine tool for hobby purposes as claimed in anyone of claims 1 to 4 in the case of which the motor (11) may undergo such axial adjustment that the driving belt (12) used with the planing shaft (2) may only be turned using the step (14) of greater diameter of the output driving belt pulley (10) and the driving belt (12) for use with the further shaft (3) may be used as desired with one or other of the two steps (14 and 15) of the output driving belt pulley (10), characterized in that the driving belt (12), which as may be desired may be powered using one or other of the two steps (14 and 15), is longer than the driving belt (12) which is only to be powered with the step (14) of greater diameter.

6. A machine tool for hobby purposes as claimed in anyone of claims 1 to 5, characterized in that the input driving belt pulley (9) used with the further shaft (3) is placed at a position between the bearing points of the further shaft.

7. A machine tool for hobby purposes as claimed in anyone of claims 1 to 6, characterized in that the further shaft (3) is bearinged in a bush (5) which by way of spacer bolts (6) is joined up with the machine frame (1).

## Revendications

1. Machine-outil combinée pour bricoleurs, équipée de deux arbres de travail juxtaposés et supportés indépendamment l'un de l'autre, à savoir, en particulier, d'un arbre de rabotage et d'un arbre supplémentaire pour la commande d'outils ou de porte-outils échangeables, accouplés à la machine, arbres qui au niveau de leurs bouts voisins portent chacun une poulie à courroie et peuvent être attaqués alternativement par un moteur commun, à position réglable en hauteur, dont l'arbre porte une poulie motrice, dont le moment de rotation peut être transmis alternativement à chacune desdites poulies au moyen d'une courroie, caractérisée en ce que les deux arbres de travail sont des arbres stationnaires et portent des poulies à courroie de même diamètre et à écran de sécurité, dont chacune est munie de sa propre courroie, qui peut être enlevée uniquement de ladite poulie du moteur, qui se présente sous forme d'une poulie étagée, dont la distance des gradins correspond à la distance axiale desdites poulies à courroie, et cela de manière que chaque courroie enlevée de la poulie motrice peut être disposée à l'écart dans un support fixe solidaire du bâti de la machine à côté de la poulie motrice, et en ce que les deux courroies de transmission requièrent des distances axiales différentes entre leur poulie et le gradin conformément aligné de la poulie étagée du moteur, dont la position est réglable par déplacement axial d'une valeur au moins égale à la distance des poulies des deux courroies de transmission.

2. Machine-outil pour bricoleurs selon la revendication 1, dont le moteur à poulie étagée extérieure est disposé à un niveau inférieur à celui de l'arbre de rabotage, caractérisée en ce que l'espace occupé par le moteur est du côté de ladite poulie motrice fermé par une porte basculante.

3. Machine-outil selon une ou plusieurs des revendications précédentes, caractérisée en ce qu'au moins le support destiné à porter la courroie éloignée du moteur à l'état de repos, se présente sous forme d'un étrier élastique coudé, dans lequel la courroie correspondante, enlevée de la poulie du moteur, est immobilisée par encrantement.

4. Machine-outil pour bricoleurs selon une ou plusieurs des revendications précédentes, caractérisée en ce qu'entre le moteur et la poulie du moteur est prévu un disque de protection parallèle à cette dernière et muni d'un manchon protecteur embrassant l'arbre du moteur, disque de protection dont la distance des proches parties du bâti de la machine est au moins égale à la largeur de la courroie voisine en vue de la formation d'un support pour la mise à l'écart de cette dernière.

5. Machine-outil pour bricoleurs selon une ou plusieurs des revendications précédentes, dont le moteur peut être déplacé axialement de manière que la courroie de la poulie de l'arbre de rabotage ne peut coopérer qu'avec le gradin au plus grand diamètre de ladite poulie étagée, mais que la courroie de la poulie de l'arbre supplémentaire peut être posée à volonté sur l'un quelconque des deux gradins de la poulie étagée, caractérisée en ce que cette dernière courroie, qui est susceptible de coopérer alternativement avec les deux gradins de la poulie étagée, est plus longue que la courroie qui ne peut coopérer qu'avec le gradin au plus grand diamètre.

6. Machine-outil pour bricoleurs selon une ou plusieurs des revendications précédentes, caractérisée en ce que la poulie de l'arbre supplémentaire est disposée dans l'intervalle entre les paliers de l'arbre supplémentaire.

7. Machine-outil selon une ou plusieurs des revendications précédentes, caractérisée en ce que ledit arbre supplémentaire est supporté dans une douille fixée par des boulons d'espacement au bâti de la machine.